# FASCICULE DE BREVET EUROPEEN

(11) **EP 4 094 018 B1**
(45) Date de publication et mention de la délivrance du brevet: **15.10.2025**
(21) Numéro de dépôt: 21700943.0
(22) Date de dépôt: 20.01.2021
(51) Int. Cl.: F23R 3/06, F01D 9/02, F23R 3/60

(54) **ENSEMBLE POUR UNE TURBOMACHINE**
ANORDNUNG FÜR EINEN TURBINENMOTOR
ASSEMBLY FOR A TURBINE ENGINE

(30) Priorité: 23.01.2020 FR 2000672
(43) Date de publication de la demande: 30.11.2022
(73) Titulaire: SAFRAN AIRCRAFT ENGINES, 75015 Paris (FR)
(72) Inventeur: DANRE, Paul Olivier, 77550 Moissy-Cramayel (FR); BACHA, Jean-Luc, 77550 Moissy-Cramayel (FR); BUREL, Julie Laure Antoinette, 77550 Moissy-Cramayel (FR); TAMIZIER, Julien Michel, 77550 Moissy-Cramayel (FR); TEXIER, Christophe Bernard, 77550 Moissy-Cramayel (FR)
(74) Mandataire: Ernest Gutmann - Yves Plasseraud S.A.S.
(86) Numéro de dépôt international: PCT/EP2021/051142
(87) Numéro de publication internationale: WO 2021/148441

(56) Documents cités:
- EP-A2- 2 592 232
- FR-A1- 2 887 588
- FR-A1- 2 944 554
- FR-A1- 3 004 518

## Description

### Domaine technique de l'invention

La présente invention concerne un ensemble pour une turbomachine, telle par exemple qu'un turboréacteur ou un turbopropulseur d'avion.

### Etat de la technique antérieure

Un tel ensemble est connu du document FR 3 004 518 au nom de la Demanderesse et est illustré aux figures 1 à 3. Celui-ci comporte une chambre annulaire de combustion 1 agencée en aval d'un compresseur, et en amont d'un distributeur 2 d'entrée d'une turbine haute-pression.

La chambre de combustion 1 comprend des parois de révolution interne et externe, appelées respectivement virole interne 3 et virole externe 4, qui s'étendent à l'intérieur l'une de l'autre et qui sont reliées en amont à une paroi annulaire de fond de chambre 5.

Afin de limiter la déformation des viroles interne 3 et externe 4, ces dernières sont équipées à leur extrémité aval de brides 6 interne et externe. Chaque bride 6 est annulaire et présente une section en forme de U ou en forme d'épingle. Chaque bride 6 s'étend radialement vers l'intérieur ou vers l'extérieur et comporte une partie radiale 7a rattachée à la virole interne 3 ou à la virole externe 4 de la chambre de combustion 1. L'extrémité libre 6a de chaque bride 6 est en outre destinée à coopérer avec un carter interne 8 ou un carter externe 9 de la chambre 1. Une partie axiale ou cylindrique 7b s'étend vers l'aval depuis la partie radiale 7a de la bride 6.

Le distributeur 2 est fixé en aval de la chambre 1 par des moyens appropriés et comprend des plates-formes interne 11 et externe 12 qui sont reliées entre elles par des aubes 13 sensiblement radiales. La plate-forme externe 12 du distributeur 2 est alignée axialement avec la partie d'extrémité aval de la virole externe 4 de la chambre 1, et sa plate-forme interne 11 est alignée axialement avec la partie d'extrémité aval de la virole interne 3 de la chambre 1. L'extrémité amont de chaque plate-forme 11, 12 du distributeur 2 comporte un rebord radial 14 de dimension plus réduite que la partie radiale 7a de la bride 6 correspondante de la chambre de combustion 1.

Un ensemble de distributeur 2 est généralement monté en aval de la chambre de combustion 1 et comprend plusieurs distributeurs 2 dont les plates-formes 11, 12 sont des secteurs d'anneau, les plates-formes 11, 12 des distributeurs 2 étant montées circonférentiellement bout à bout pour créer un canal de circulation des fluides en aval de la chambre de combustion 1.

Les parties radiales 7a et les rebords 14 délimitent, pour chaque virole 3, 4, un espace annulaire 15 qui débouche à une extrémité radialement interne dans la chambre 1 et qui est fermé à son extrémité radialement externe par des moyens d'étanchéité 16.

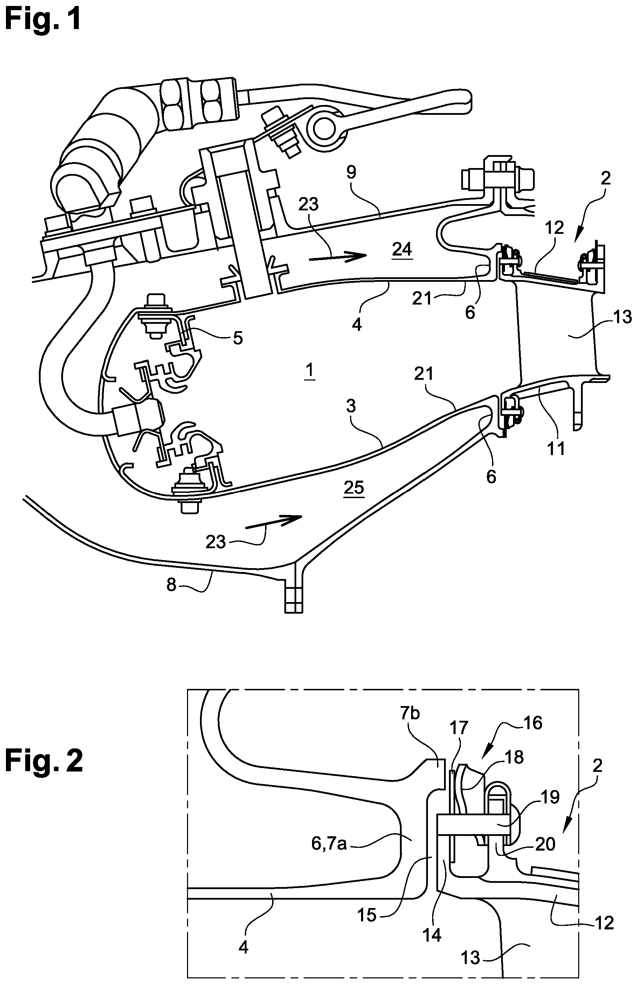

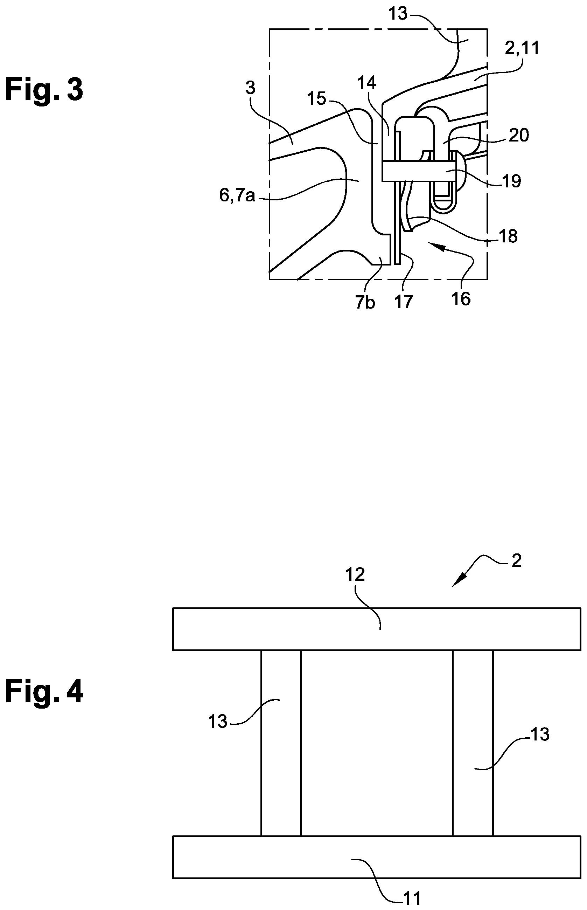

Comme cela est mieux visible aux figures 2 et 3, ces moyens d'étanchéité 16 comportent des lamelles d'étanchéité 17 s'étendant radialement et circonférentiellement le long de chaque secteur de distributeur 2. Chaque lamelle 17 est apte à prendre appui de façon étanche sur une face radiale du rebord 14 correspondant du distributeur 2 et sur l'extrémité libre de la partie axiale 7b de la bride 6 correspondante de la chambre de combustion 1. Les lamelles 17 sont maintenues en appui sur lesdites parties 7b, 14 à l'aide de moyens élastiques de rappel.

Ces moyens élastiques sont par exemple des ressorts hélicoïdaux ou des lames élastiques 18, fixées par l'intermédiaire de vis 19 qui sont vissées dans des pattes 20 s'étendant radialement depuis la virole correspondante 11, 12 du distributeur 2. Les parties aval 21 des viroles interne et externe 3, 4 peuvent comporter des multiperforations. Lors du fonctionnement de la turbomachine, de l'air de contournement 23 circule dans les espaces 24 et 25 délimités respectivement par le carter externe 9 et la virole externe 4, d'une part, et par le carter interne 8 et la virole interne 3, d'autre part. Cet air de contournement 23 traverse les multiperforations, de manière à limiter l'échauffement des parties aval 21 des viroles interne et externe 3, 4.

En fonctionnement, des recirculations locales du flux de gaz chaud et une mauvaise répartition des flux d'air de refroidissement au sein de l'espace annulaire 15 apparaissent, pouvant générer une dégradation prématurée des brides 6, en particulier au niveau des parties radiales 7a des brides, et une dégradation des plates-formes 1, 12 du distributeur 2.

Un ensemble pour une turbomachine selon le préambule de la revendication 1 est connu du document FR 3 004 518.

L'invention a notamment pour but d'apporter une solution simple, efficace et économique à ce problème.

### Présentation de l'invention

A cet effet, l'invention concerne un ensemble pour une turbomachine s'étendant autour d'un axe et comportant :
- une chambre de combustion comprenant, à son extrémité aval, une bride aval comportant une partie s'étendant radialement,
- un distributeur disposé en aval de la chambre de combustion et comportant une plate-forme à partir de laquelle s'étend radialement au moins une pale, la plate-forme comprenant un rebord amont s'étendant radialement et délimitant, avec la partie radiale de la bride aval disposée en regard, un espace annulaire de circulation d'air de refroidissement débouchant dans la chambre de combustion à son extrémité radialement interne et comportant, à son extrémité radialement externe, des moyens d'étanchéité fixés au distributeur, les moyens d'étanchéité s'étendant d'une part contre le distributeur et d'autre part contre la bride caractérisé en ce que ledit rebord du distributeur ou ladite partie radiale de la bride de la chambre de combustion comporte au moins une irrégularité de surface tournée du côté de l'espace annulaire de circulation d'air, ladite irrégularité de surface étant formée par un renfoncement ou une zone en saillie.

La présence des irrégularités de surface à des endroits déterminés permet de mieux répartir les flux d'air de refroidissement au sein de l'espace annulaire de circulation d'air de refroidissement de façon à éviter une dégradation prématurée de la bride de la chambre de combustion et de la plate-forme du distributeur.

Les termes axial, radial et circonférentiels sont définis par rapport à l'axe de l'ensemble, qui est confondu avec l'axe de la turbomachine. Par ailleurs les termes amont et aval sont définis par rapport au sens de circulation des gaz au sein de la turbomachine.

Le renfoncement est formé par une zone en creux, localisée, ne traversant pas axialement la bride ou le rebord amont.

La chambre de combustion peut comporter une virole annulaire radialement interne et une virole annulaire radialement externe, chaque virole comportant une bride aval, le distributeur comportant une plate-forme radialement interne et une plate-forme radialement externe reliées par au moins une pale, chaque plate-forme comportant un rebord amont disposé en regard de la bride aval de la virole correspondante.

Les viroles radialement interne et externes de la chambre de combustion peuvent être reliées par une paroi de fond annulaire.

L'irrégularité de surface peut être formée sur chaque bride de la virole radialement interne et/ou sur chaque rebord, de façon à améliorer plus spécifiquement la répartition des flux d'air de refroidissement dans ces zones, qui sont les zones les plus touchées par des risques de dégradation.

Chaque rebord et/ou la bride aval comporte au moins une irrégularité de surface en renfoncement traversée par un plan radial de référence, ledit plan radial de référence étant décalé angulairement ou non par rapport à un plan radial médian passant par une pale du distributeur s'étendant depuis la plate-forme correspondante du distributeur.

Le renfoncement génère ainsi une zone de dépression à proximité de la pale du distributeur, ce qui a tendance à rapprocher les flux d'air de refroidissement dans les zones de la bride et du rebord situées circonférentiellement au niveau de ladite pale, où les risques de dégradation sont plus importants en l'absence d'une telle irrégularité de surface. En d'autres termes, une telle caractéristique assure une répartition plus homogène du flux d'air de refroidissement dans l'espace annulaire précité.

Le renfoncement peut comporter une forme générale de portion de sphère ou une forme de portion de sphéroïde ou d'ellipsoïde de révolution. Dans le cas où la zone de renfoncement est de forme générale oblongue, l'axe d'extension de ladite zone en renfoncement peut être radial ou s'étendre circonférentiellement ou tangentiellement.

De façon générale, quelle que soit la forme de réalisation envisagée, le positionnement du plan de référence par rapport au plan radial médian passant par la pale peut être fonction notamment du sens de giration du rotor dans la turbomachine et de la forme de la pale, en particulier du bord d'attaque de la pale.

On rappelle qu'une pale comporte une surface d'extrados et une surface d'intrados reliées à l'amont par un bord d'attaque et à l'aval par un bord de fuite.

Chaque rebord et/ou la bride comporte au moins deux irrégularités de surface en saillie situées circonférentiellement de part et d'autre d'un plan radial de référence, chaque irrégularité de surface étant décalée circonférentiellement par rapport audit plan radial de référence, ledit plan radial de référence étant décalé angulairement ou nonpar rapport à un plan radial médian passant par une pale du distributeur s'étendant depuis la plate-forme correspondante du distributeur.

Les zones en saillie ou en surépaisseur génèrent localement des zones de plus forte pression de part et d'autre de la zone située en regard de la pale du distributeur, ce qui permet de dévier les flux de manière à forcer le mélange en augmentant le volume de circulation de l'air localement. Ceci a également tendance à rapprocher les flux d'air de refroidissement dans les zones de la bride et du rebord situées circonférentiellement au niveau de ladite pale, où les risques de dégradation sont plus importants en l'absence d'une telle irrégularité de surface. En d'autres termes, une telle caractéristique assure une répartition plus homogène du flux d'air de refroidissement dans l'espace annulaire précité.

Chaque zone en saillie peut présenter une forme arrondie. Chaque zone en saillie peut présenter une forme oblongue s'étendant selon un axe. Ledit axe d'extension de chaque zone en saillie peut former un angle avec la direction radiale. Les zones en saillie situées de part et d'autre du plan de référence peuvent être inclinées l'une par rapport à l'autre et par rapport au plan radial de référence et peuvent se rapprocher l'une de l'autre dans la direction de la pale. La bride aval peut comporter au moins un orifice de circulation d'air de refroidissement s'étendant au moins axialement et débouchant dans ledit espace annulaire de circulation d'air, en regard du rebord amont correspondant.

L'air traversant lesdits orifices peut ainsi refroidir par impact le rebord amont de la plate-forme du distributeur.

Le rebord amont et/ou la bride aval comporte une irrégularité de surface en renfoncement située dans un plan radial de référence, ledit plan radial de référence étant décalé angulairement ou non par rapport à un plan radial médian passant par l'orifice de circulation d'air de refroidissement.

Le plan radial de référence peut coïncider avec le plan radial médian passant par l'orifice de circulation d'air de refroidissement.

Le renfoncement génère ainsi une zone de dépression en regard de l'orifice, ce qui assure une répartition plus homogène du flux d'air de refroidissement dans l'espace annulaire précité. Le rebord amont et/ou la bride aval peut comporter au moins deux irrégularités de surface en saillie situées circonférentiellement de part et d'autre d'un plan radial de référence, chaque irrégularité de surface étant décalée circonférentiellement par rapport audit plan radial de référence, ledit plan radial de référence étant décalé angulairement ou non par rapport à un plan radial médian passant par l'orifice de circulation d'air de refroidissement.

Les zones en saillie génèrent localement des zones de plus forte pression de part et d'autre de l'orifice et dévient les flux de manière à forcer le mélange en augmentant le volume de circulation de l'air localement, ce qui assure une répartition plus homogène du flux d'air de refroidissement dans l'espace annulaire précité.

Les moyens d'étanchéité peuvent comporter au moins une lamelle s'étendant radialement et circonférentiellement, et prenant appui axialement sur la bride de la chambre de combustion et sur le rebord amont du distributeur.

Le distributeur peut être annulaire et peut comporter plusieurs secteurs angulaires adjacents répartis sur la circonférence.

L'appui de la lamelle sur la bride et sur le rebord amont peut être un appui axial.

Le rebord amont peut s'étendre radialement. La lamelle peut prendre appui sur une face radiale aval du rebord amont. La bride peut comporter une partie axiale, l'extrémité aval de ladite partie axiale peut former une face d'appui radiale servant à l'appui de la lamelle.

L'invention concerne également une turbomachine comportant un ensemble du type précité.

L'invention concerne également un aéronef comportant une turbomachine du type précité ou un ensemble du type précité.

### Brève description des figures

[Fig. 1] est une vue en coupe axiale d'un ensemble pour turbomachine de l'art antérieur,
[Fig. 2] est une vue de détail d'une partie de la figure 1,
[Fig. 3] est une vue de détail d'une partie de la figure 1,
[Fig. 4] est une vue schématique d'un secteur de distributeur,
[Fig. 5] est une vue schématique du rebord amont d'un secteur de distributeur selon une première forme de réalisation de l'invention,
[Fig. 6] est une vue schématique du rebord amont d'un secteur de distributeur selon une deuxième forme de réalisation de l'invention,
[Fig. 7] est une vue schématique du rebord amont d'un secteur de distributeur selon une troisième forme de réalisation de l'invention,
[Fig. 8] est une vue schématique du rebord amont d'un secteur de distributeur selon une quatrième forme de réalisation de l'invention.

### Description détaillée de l'invention

La figure 4 illustre un secteur angulaire de distributeur 2 d'un ensemble selon l'invention. Celui-ci comporte un secteur de plate-forme radialement interne 11 et un secteur de plate-forme radialement externe 12, reliés l'un à l'autre par des pales 13 s'étendant radialement, ici deux pales 13. Chaque pale 13 comporte une surface d'intrados et une surface d'extrados reliées l'une à l'autre à l'amont par un bord d'attaque et à l'aval par un bord de fuite.

Plusieurs secteurs de ce type peuvent être fixés de façon adjacente ou contigüe de façon à former un distributeur 2 annulaire.

Sur la figure 4 et les figures suivantes, les plates-formes 11, 12 sont représentées de façon rectiligne bien qu'elles présentent en réalité la forme de secteurs d'anneau.

Les figures 4 et suivantes représentent uniquement les rebords amonts 14 des plates-formes radialement internes 11 des secteurs de distributeur 2.

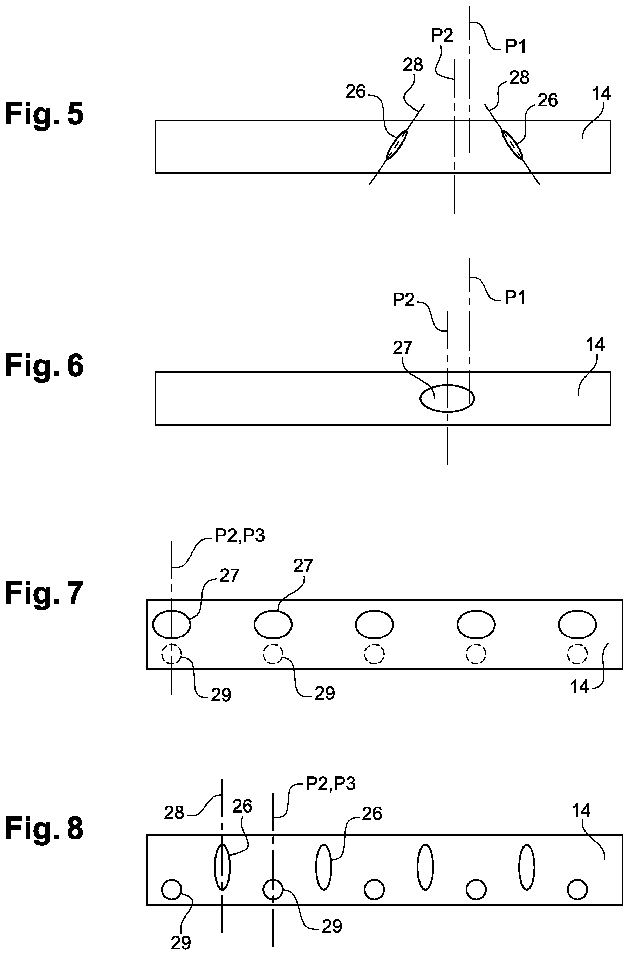

Chaque pale 13 s'étend selon un plan radial médian P1, dont la position est illustrée par des traits pointillés aux figures 4 et 5.

Dans la forme de réalisation de la figure 5, le rebord amont 14 comporte, pour chaque pale 13, deux irrégularités de surface formés par deux zones oblongues en saillie 26 situées de part et d'autre d'un plan radial de référence P2, chaque irrégularité de surface 26 étant décalée circonférentiellement par rapport audit plan radial de référence P2. Le plan radial de référence P2 est décalé angulairement ou non par rapport au plan radial médian P1 passant par la pale 13 correspondante du distributeur 2.

Le positionnement du plan de référence P2 par rapport au plan radial médian P1 passant par la pale 13 est fonction notamment du sens de giration du rotor dans la turbomachine et de la forme de la pale 13, en particulier du bord d'attaque de la pale 13.

L'axe d'extension 27 de chaque zone en saillie 26 forme un angle avec la direction radiale ou le plan P2. Les zones en saillie 26 situées de part et d'autre du plan de référence P2 sont inclinées l'une par rapport à l'autre et par rapport au plan radial de référence P2 et se rapprochent l'une de l'autre dans la direction de la pale 13, c'est-à-dire vers le haut à la figure 5.

Seules deux zones en saillie 26 sont représentées sur la figure 5. Comme indiqué précédemment, le rebord amont 14 comporte en réalité une paire de zones en saillie 26 pour chaque pale 13 du distributeur 2.

En fonctionnement, les zones en saillie 26 génèrent localement des zones de plus forte pression de part et d'autre de la zone située en regard de la pale 13 du distributeur 2, ce qui a tendance à rapprocher les flux d'air de refroidissement dans les zones de la bride 6 et du rebord 14 situées circonférentiellement au niveau de ladite pale 13, où les risques de dégradation sont plus importants en l'absence d'une telle irrégularité de surface. En d'autres termes, une telle caractéristique assure une répartition plus homogène du flux d'air de refroidissement dans l'espace annulaire 15 de circulation d'air de refroidissement, situé axialement entre la bride 6 aval correspondante de la chambre de combustion 1 et le rebord amont 14 précité, de façon à éviter une dégradation prématurée de la bride 6 de la chambre de combustion 1 et de la plate-forme 11 du distributeur 2.

La figure 6 illustre une autre forme de réalisation dans laquelle le rebord amont 14 comporte, pour chaque pale 13, une irrégularité de surface en renfoncement 27, située dans un plan radial de référence P2. Le plan radial de référence P2 est décalé angulairement ou non par rapport au plan radial médian P1 passant par la pale 13 correspondante du distributeur 2.

En fonctionnement, le renfoncement 27 génère ainsi une zone de dépression à proximité de la pale 13 du distributeur 2, ce qui a tendance à rapprocher les flux d'air de refroidissement dans les zones de la bride 6 et du rebord 14 situées circonférentiellement au niveau de ladite pale 13, où les risques de dégradation sont plus importants en l'absence d'une telle irrégularité de surface. En d'autres termes, une telle caractéristique assure une répartition plus homogène du flux d'air de refroidissement dans l'espace annulaire 15 précité.

Le renfoncement 27 peut comporter une forme générale de portion de sphère ou une forme de portion de sphéroïde ou d'ellipsoïde de révolution. Dans le cas où la zone de renfoncement 27 est de forme générale oblongue, l'axe d'extension de ladite zone en renfoncement 27 peut être radial ou peut s'étendre circonférentiellement ou tangentiellement.

Les figures 7 et 8 illustrent des formes de réalisation dans lesquelles la bride 6 comporte des orifices 29 de passage d'air de refroidissement. L'air de refroidissement issu desdits orifices 29 permet de refroidir par impact le rebord amont 14 correspondant du distributeur 2 mais génère des hétérogénéités dans la répartition des flux d'air de refroidissement. Les positions circonférentielles des orifices 29 sont représentées par des traits pointillés sur les figures 7 et 8.

Afin de limiter une telle hétérogénéité, dans la forme de réalisation de la figure 7, le rebord amont 14 comporte, pour chaque orifice 29, un renfoncement 27 situé dans un plan radial de référence P2 qui coïncide avec le plan médian P3 passant par l'orifice de circulation d'air de refroidissement 29. L'orifice 29 du jet d'impact est dimensionné et disposé de façon à refroidir le rebord amont 14.

Le renfoncement 27 génère ainsi une zone de dépression en regard de l'orifice 29, ce qui assure une répartition plus homogène du flux d'air de refroidissement dans l'espace annulaire précité.

La figure 8 illustre une variante de réalisation, qui diffère de celle décrite en référence à la figure 7 en ce que le rebord amont 14 comporte deux irrégularités de surface en saillie 26 situées chacune dans un plan 28 et situées circonférentiellement de part et d'autre du plan médian P3 de chaque orifice 29.

En d'autres termes, les zones en saillie 26 sont réparties circonférentiellement entre les positions circonférentielles des orifices 29.

Les zones en saillie 26 génèrent localement des zones de plus forte pression de part et d'autre de la position circonférentielle de chaque orifice 29, ce qui assure une répartition plus homogène du flux d'air de refroidissement dans l'espace annulaire 15 précité.

De façon générale, les surépaisseurs ou zones en saillies 26 orientent le flux de refroidissement en lui imposant une déviation. L'invention permet ainsi d'orienter le flux de refroidissement vers les zones usuellement chaudes afin de réduire la température du métal. L'air est ensuite expulsé vers la veine par différentiel de pression, depuis la zone située hors de ladite veine jusque dans la veine.

Par ailleurs, les sous-épaisseurs ou renfoncement 27 augmentent le volume de circulation d'air, et créent une zone locale de légère dépression, happant l'air à proximité. De cette manière, la zone est localement mieux refroidie car l'air y est plus frais. L'air est ensuite expulsé vers la veine par différentiel de pression, depuis la zone située hors de ladite veine jusque dans la veine.

## Revendications

1. Ensemble pour une turbomachine s'étendant autour d'un axe et comportant :
- une chambre de combustion (1) comprenant, à son extrémité aval, une bride (6) aval comportant une partie (7a) s'étendant radialement,
- un distributeur (2) disposé en aval de la chambre de combustion (1) et comportant une plate-forme (11, 12) à partir de laquelle s'étend radialement au moins une pale (13), la plate-forme (11, 12) comprenant un rebord (14) amont s'étendant radialement et délimitant, avec la partie radiale (7a) de la bride (6) disposée en regard, un espace (15) annulaire de circulation d'air de refroidissement débouchant dans la chambre de combustion (1) à son extrémité radialement interne et comportant, à son extrémité radialement externe, des moyens d'étanchéité (17, 18) fixés au distributeur (2), les moyens d'étanchéité s'étendant d'une part contre le distributeur (2) et d'autre part contre la bride (6), **caractérisé en ce que** ledit rebord (14) du distributeur (2) ou ladite partie radiale de la bride (6) de la chambre de combustion (1) comporte au moins une irrégularité de surface tournée du côté de l'espace annulaire (15) de circulation d'air, ladite irrégularité de surface étant formée par un renfoncement (27) ou une zone en saillie (26), et **en ce que** chaque rebord (14) et/ou chaque bride (6) aval comporte au moins une irrégularité de surface en renfoncement (27) traversée par un plan radial de référence (P2), ledit plan radial de référence (P2) étant décalé angulairement ou non par rapport à un plan radial médian (P1) passant par une des au moins une pale (13) du distributeur (2) s'étendant depuis la plate-forme correspondante (11, 12) du distributeur (2), ou au moins deux irrégularités de surface en saillie (26) situées circonférentiellement de part et d'autre du plan radial de référence (P2), chaque irrégularité de surface étant décalée circonférentiellement par rapport audit plan radial de référence (P2), ledit plan radial de référence (P2) étant décalé angulairement ou non par rapport à au plan radial médian (P1) passant par une des au moins une pale (13) du distributeur (2) s'étendant depuis la plate-forme correspondante (11, 12) du distributeur (2).

2. Ensemble selon la revendication 1, **caractérisé en ce que** la chambre de combustion (1) comporte une virole annulaire radialement interne (3) et une virole annulaire radialement externe (4), chaque virole (3, 4) comportant une bride (6) aval, le distributeur (2) comportant une plate-forme radialement interne (11) et une plate-forme radialement externe (12) reliées par au moins une des au moins une pale (13), chaque plate-forme comportant un rebord (14) amont disposé en regard de la bride (6) aval de la virole correspondante.

3. Ensemble selon la revendication 2, **caractérisé en ce que** l'irrégularité de surface (26, 27) est formée sur chaque bride (6) de la virole radialement interne (3) et/ou sur chaque rebord (14).

4. Ensemble selon l'une des revendications 1 à 3, **caractérisé en ce que** chaque bride (6) comporte au moins un orifice (29) de circulation d'air de refroidissement qui s'étendant au moins axialement et débouche dans ledit espace annulaire (15) de circulation d'air, en regard du rebord (14) correspondant.

5. Ensemble selon la revendication 4, **caractérisé en ce que** chaque rebord (14) et/ou chaque bride (6) comporte une irrégularité de surface en renfoncement (27) située dans un plan radial de référence (P2), ledit plan radial de référence (P2) étant décalé angulairement ou non par rapport à un plan radial médian (P3) passant par l'orifice (29) de circulation d'air de refroidissement.

6. Ensemble selon la revendication 4 ou 5, **caractérisé en ce que** chaque rebord (14) et/ou chaque bride (6) comporte au moins deux irrégularités de surface en saillie (26) situées circonférentiellement de part et d'autre d'un plan radial de référence (P2), chaque irrégularité de surface étant décalée circonférentiellement par rapport audit plan radial de référence (P2), ledit plan radial de référence (P2) étant décalé angulairement ou non par rapport à un plan radial médian (P3) passant par l'orifice (29) de circulation d'air de refroidissement.

7. Ensemble selon l'une des revendications 1 à 6, **caractérisé en ce que** les moyens d'étanchéité (16) comportent au moins une lamelle (17) s'étendant radialement et circonférentiellement, et prenant appui axialement sur la bride (6) de la chambre de combustion (1) et sur le rebord amont (14) du distributeur (2).

8. Turbomachine comportant au moins un ensemble selon l'une des revendications 1 à 7.

## Patentansprüche

1. Anordnung für ein Turbotriebwerk, die sich um eine Achse erstreckt und umfasst:
- eine Brennkammer (1), die an ihrem stromabwärtigen Ende einen stromabwärtigen Flansch (6) mit einem sich radial erstreckenden Abschnitt (7a) aufweist,
- einen Leitapparat (2), der stromabwärts der Brennkammer (1) angeordnet ist und eine Plattform (11, 12) umfasst, von der aus sich zumindest eine Schaufel (13) radial erstreckt, wobei die Plattform (11, 12) eine stromaufwärts gelegene Randkante (14) umfasst, die sich radial erstreckt und mit dem gegenüberliegend angeordneten radialen Abschnitt (7a) des Flansches (6) einen ringförmigen Raum (15) für die Zirkulation von Kühlluft begrenzt, der an seinem radial inneren Ende in die Brennkammer (1) mündet und an seinem radial äußeren Ende Dichtungsmittel (17, 18) aufweist, die an den Leitapparat (2) befestigt sind, wobei die Dichtungsmittel einerseits am Leitapparat (2) und andererseits am Flansch (6) anliegend verlaufen,
**dadurch gekennzeichnet, dass** die Randkante (14) des Leitapparats (2) bzw. der radiale Abschnitt des Flansches (6) der Brennkammer (1) zumindest eine Oberflächenunebenheit aufweist, die der Seite des ringförmigen Luftzirkulationsraums (15) zugewandt ist, wobei die Oberflächenunebenheit aus einer Vertiefung (27) bzw. einem vorspringenden Bereich (26) gebildet ist, und dass jede Randkante (14) und/oder jeder stromabwärtige Flansch (6) zumindest eine vertieft ausgeführte Oberflächenunebenheit (27) aufweist, durch welche eine radiale Bezugsebene (P2) verläuft, wobei gegebenenfalls die radiale Bezugsebene (P2) winkelmäßig gegenüber einer radialen Mittelebene (P1) versetzt angeordnet ist, die durch eine der zumindest einen Schaufel (13) des Leitapparats (2) verläuft, die sich von der entsprechenden Plattform (11, 12) des Leitapparats (2) aus erstreckt, oder zumindest zwei vorspringend ausgeführte Oberflächenunebenheiten (26) aufweist, die sich in Umfangsrichtung auf beiden Seiten der radialen Bezugsebene (P2) befinden, wobei jede Oberflächenunebenheit gegenüber der radialen Bezugsebene (P2) in Umfangsrichtung versetzt angeordnet ist, wobei gegebenenfalls die radiale Bezugsebene (P2) gegenüber der radialen Mittelebene (P1), die durch eine der zumindest einen Schaufel (13) des Leitapparats (2) verläuft, die sich von der entsprechenden Plattform (11, 12) des Leitapparats (2) aus erstreckt, winkelmäßig versetzt angeordnet ist.

2. Anordnung nach Anspruch 1,
**dadurch gekennzeichnet, dass** die Brennkammer (1) einen radial inneren Mantelring (3) und einen radial äußeren Mantelring (4) umfasst, wobei jeder Mantelring (3, 4) einen stromabwärtigen Flansch (6) umfasst, wobei der Leitapparat (2) eine radial innere Plattform (11) und eine radial äußere Plattform (12) umfasst, die durch zumindest eine der zumindest einen Schaufel (13) verbunden sind, wobei jede Plattform eine stromaufwärtige Randkante (14) aufweist, die dem stromabwärtigen Flansch (6) des entsprechenden Mantelrings gegenüberliegend angeordnet ist.

3. Anordnung nach Anspruch 2,
**dadurch gekennzeichnet, dass** die Oberflächenunebenheit (26, 27) an jedem Flansch (6) des radial inneren Mantelrings (3) und/oder an jeder Randkante (14) ausgebildet ist.

4. Anordnung nach einem der Ansprüche 1 bis 3,
**dadurch gekennzeichnet, dass** jeder Flansch (6) zumindest eine Öffnung (29) für die Zirkulation von Kühlluft aufweist, die sich zumindest axial erstreckt und in den ringförmigen Luftzirkulationsraum (15), der entsprechenden Randkante (14) gegenüberliegend, mündet.

5. Anordnung nach Anspruch 4,
**dadurch gekennzeichnet, dass** jede Randkante (14) und/oder jeder Flansch (6) eine vertieft ausgeführte Oberflächenunebenheit (27) aufweist, die sich in einer radialen Bezugsebene (P2) befindet, wobei gegebenenfalls die radiale Bezugsebene (P2) gegenüber einer radialen Mittelebene (P3), die durch die Öffnung (29) zur Zirkulation von Kühlluft verläuft, winkelmäßig versetzt angeordnet ist.

6. Anordnung nach Anspruch 4 oder 5,
**dadurch gekennzeichnet, dass** jede Randkante (14) und/oder jeder Flansch (6) zumindest zwei vorspringend ausgeführte Oberflächenunebenheiten (26) aufweist, die sich in Umfangsrichtung auf beiden Seiten einer radialen Bezugsebene (P2) befinden, wobei jede Oberflächenunebenheit gegenüber der radialen Bezugsebene (P2) in Umfangsrichtung versetzt angeordnet ist, wobei gegebenenfalls die radiale Bezugsebene (P2) gegenüber einer radialen Mittelebene (P3), die durch die Öffnung (29) zur Zirkulation von Kühlluft verläuft, winkelmäßig versetzt angeordnet ist.

7. Anordnung nach einem der Ansprüche 1 bis 6,
**dadurch gekennzeichnet, dass** die Dichtungsmittel (16) zumindest einen Steg (17) umfassen, der sich radial und in Umfangsrichtung erstreckt und sich axial an dem Flansch (6) der Brennkammer (1) und an der stromaufwärts gelegenen Randkante (14) des Leitapparats (2) abstützt.

8. Turbotriebwerk mit zumindest einer Anordnung nach einem der Ansprüche 1 bis 7.

## Claims

1. An assembly for a turbomachine extending about an axis and comprising:
- a combustion chamber (1) comprising, at its downstream end, a downstream flange (6) having a radially extending part (7a),
- a distributor (2) disposed downstream of the combustion chamber (1) and having a platform (11, 12) from which at least one vane (13) extends radially, the platform (11, 12) comprising an upstream rim (14) extending radially and delimiting, with the radial part (7a) of the flange (6) disposed opposite it, an annular space (15) for the circulation of cooling air opening into the combustion chamber (1) at its radially internal end and having, at its radially external end, means of sealing (17, 18) attached to the distributor (2), the means of sealing extending, firstly, against the distributor (2) and, secondly, against the flange (6) **characterized in that** the said rim (14) of the distributor (2) or the said radial part of the flange (6) of the combustion chamber (1) has at least one surface irregularity facing the side of the annular space (15) for the circulation of air, the said surface irregularity being formed by a recess (27) or a protruding zone (26),
and **in that** each rim (14) and/or each downstream flange (6) comprises:
either at least one recessed surface irregularity (27) traversed by a radial reference plane (P2), the said radial reference plane (P2) being angularly offset, or not, with respect to a median radial plane (P1) passing through one of the at least one vane (13) of the distributor (2) extending from the corresponding platform (11, 12) of the distributor (2),
or at least two projecting surface irregularities (26) situated circumferentially on either side of a radial reference plane (P2), each surface irregularity being offset circumferentially with respect to the said radial reference plane (P2), the said radial reference plane (P2) being angularly offset, or not, with respect to a median radial plane (P1) passing through one of the at least one vane (13) of the distributor (2) extending from the corresponding platform (11, 12) of the distributor (2).

2. An assembly according to claim 1, **characterised in that** the combustion chamber (1) has an annular radially internal shroud (3) and an annular radially external shroud (4), each shroud (3, 4) having a downstream flange (6), the distributor (2) having a radially internal platform (11) and a radially external platform (12) connected by at least one of the at least one vane (13), each platform having an upstream rim (14) disposed opposite the downstream flange (6) of the corresponding shroud.

3. An assembly according to claim 2, **characterized in that** the surface irregularity (26, 27) is formed on each flange (6) of the radially internal shroud (3) and/or on each rim (14).

4. An assembly according to one of claims 1 to 3, **characterized in that** each flange (6) comprises at least one orifice (29) for the circulation of cooling air which extends at least axially and opens into the said annular space (15) for the circulation of air, facing the corresponding rim (14).

5. An assembly according to claim 4, **characterized in that** each flange (6) has at least two projecting surface irregularities (26) situated circumferentially on either side of a radial reference plane (P2), each surface irregularity being offset circumferentially with respect to the said radial reference plane (P2), the said radial reference plane (P2) being angularly offset, or not, with respect to a median radial plane (P3) passing through the orifice (29) for the circulation of cooling air.

6. An assembly according to one of claims 4 or 5, **characterized in that** each rim (14) and/or each flange (6) comprises at least two recessed surface irregularities situated circumferentially on either side of a radial reference plane (P2) , each surface irregularity being circumferentially offset with respect to the said reference plane (P2) being angularly offset, or not, with respect to a median radial plane (P3) passing through the orifice (29) for the circulation of cooling air.

7. An assembly according to one of claims 1 to 6, **characterized in that** the means of sealing (16) comprise at least one strip (17) extending radially and circumferentially, and bearing axially on the flange (6) of the combustion chamber (1) and on the upstream rim (14) of the distributor (2).

8. A turbomachine comprising at least an assembly according to one of claims 1 to 7.
